(19) Europäisches Patentamt
European Patent Office
Office européen des brevets

(11) **EP 4 022 262 B1**

(12) **EUROPÄISCHE PATENTSCHRIFT**

(45) Veröffentlichungstag und Bekanntmachung des Hinweises auf die Patenterteilung:
**10.07.2024 Patentblatt 2024/28**

(21) Anmeldenummer: **20754190.5**

(22) Anmeldetag: **03.08.2020**

(51) Internationale Patentklassifikation (IPC):
**G01F 1/84** *(2006.01)*  **G01F 15/02** *(2006.01)*
**G01N 9/00** *(2006.01)*  **G01N 11/16** *(2006.01)*

(52) Gemeinsame Patentklassifikation (CPC):
**G01F 1/84; G01F 15/02; G01N 9/002; G01N 11/16;**
G01N 2009/006

(86) Internationale Anmeldenummer:
**PCT/EP2020/071817**

(87) Internationale Veröffentlichungsnummer:
**WO 2021/037492 (04.03.2021 Gazette 2021/09)**

(54) **VERFAHREN UND MESSGERÄT ZUM BESTIMMEN DER VISKOSITÄT EINES MEDIUMS**

METHOD AND MEASURING DEVICE FOR DETERMINING THE VISCOSITY OF A MEDIUM

PROCÉDÉ ET DISPOSITIF DE MESURE POUR DÉTERMINER LA VISCOSITÉ D'UN MILIEU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.08.2019 DE 102019123368**

(43) Veröffentlichungstag der Anmeldung:
**06.07.2022 Patentblatt 2022/27**

(73) Patentinhaber: **Endress + Hauser Flowtec AG**
**4153 Reinach (CH)**

(72) Erfinder:
• **RIEDER, Alfred**
**84032 Landshut (DE)**
• **KUMAR, Vivek**
**4123 Allschwil (CH)**
• **ALIOLI, Mattia**
**4102 Binningen (CH)**

(74) Vertreter: **Hahn, Christian**
**Endress+Hauser Group Services**
**(Deutschland)AG +Co. KG**
**Colmarer Straße 6**
**79576 Weil am Rhein (DE)**

(56) Entgegenhaltungen:
**WO-A1-2018/114402    DE-A1- 102017 129 036**
**US-A1- 2001 039 829**

**Beschreibung**

Die vorliegende Erfindung betrifft ein Verfahren zum Bestimmen der Viskosität eines Mediums auf Basis der Dämpfung der Messrohrschwingungen eines Coriolis-Massedurchflussmessgeräts, bzw. eines Dichtemessgeräts mit einem schwingenden Messrohr. Weiterhin betrifft die Erfindung ein Messgerät zur Durchführung des Verahrens.

Die Ermittlung der Viskosität auf Basis der Dämpfung von Messrohrschwingungen ist an sich bekannt und beispielsweise Gegenstand der Offenlegungsschriften DE 100 20 606 A1, DE 10 2004 014 029 A1 und WO 2018 / 114 402 A1. Untersuchungen der Erfinder der vorliegenden Patentanmeldung haben ergeben, dass oberhalb einer kritischen Durchflussrate bzw. Strömungsgeschwindigkeit die Dämpfung steigende Fluktationen aufweist und der Mittelwert der Dämpfung ansteigt. Demnach unterliegt die Dämpfung noch anderen Einflussgrößen als der Viskosität eines in den Messrohren geführten Mediums. Es ist daher die Aufgabe der Vorliegenden Erfindung, ein Verfahren und ein Messgerät bereitzustellen, die eine zuverlässige Viskositätsmessung auch bei großen Durchflussraten ermöglicht. Die Aufgabe wird erfindungsgemäß gelöst, durch das Verfahren gemäß Patentanspruch 1 und das Messgerät gemäß Patentanspruch 10.

Das erfindungsgemäße Verfahren dient zum Bestimmen eines Zielmesswerts (X), welcher eine Viskosität eines Mediums oder eine von der Viskosität abhängige Größe eines ein Messrohr durchströmenden Mediums umfasst, auf Basis von vorläufigen Dämpfungsmesswerten mindestens einer Schwingungsmode des Messrohrs, wobei die Dämpfung von der Viskosität des Mediums abhängt und eine Querempfindlichkeit zur Durchflussgeschwindigkeit des Mediums aufweist, wobei das Verfahren umfasst:

> Anregen von Schwingungen mindestens einer Schwingungsmode;
> Erfassen einer Folge von vorläufigen Dämpfungsmesswerten für die mindestens eine Messrohrschwingungsmode; und
> Berechnen von Zielmesswerten (X);
> dass
> eine Korrektur des Einflusses der Querempfindlichkeit der Dämpfung zur Durchflussgeschwindigkeit des Mediums erfolgt, indem auf Basis der vorläufigen Dämpfungsmesswerte bereinigte Dämpfungsmesswerte ermitteln werden, welche der Dämpfung bei einem nicht strömenden Medium entsprechen, und das Ermitteln der Zielmesswerte auf Basis der bereinigten Dämpfungsmesswerte erfolgt, oder
> eine Korrektur des Einflusses der Querempfindlichkeit der Dämpfung zur Durchflussgeschwindigkeit des Mediums erfolgt, indem auf Basis der vorläufigen Dämpfungsmesswerte vorläufige Zwischenwerte einer dämpfungsabhängigen Größe bestimmt werden, bereinigte Zwischenwerte ermitteln werden, welche den Zwischenwerten bei einem nicht strömenden Medium entsprechen, und das Ermitteln der Zielmesswerte auf Basis der bereinigten Zwischenwerte erfolgt.

Erfindungsgemäß bewirkt die Querempfindlichkeit der Dämpfung zur Durchflussgeschwindigkeit oberhalb eines kritischen Geschwindigkeitswerts einen Anstieg der Dämpfung mit der Durchflussgeschwindigkeit, und wobei die Fluktuation der vorläufigen Dämpfungsmesswerte mit der Durchflussgeschwindigkeit zunimmt, wobei die Korrektur des Einflusses der Querempfindlichkeit auf Basis der Fluktuation der vorläufigen Dämpfungsmesswerte bzw. der vorläufigen Zwischenwerte und/oder auf Basis einer Funktion erfolgt, die von einem Durchflussparameter des Mediums abhängt, wobei der Durchflussparameter einen insbesondere vorläufigen Wert der Massedurchflussrate, der Volumendurchflussrate, der Reynoldszahl oder der Durchflussgeschwindigkeit umfasst.

Ein einer Weiterbildung der Erfindung erfolgt die Korrektur des Einflusses der Querempfindlichkeit auf Basis der Fluktuation der vorläufigen Dämpfungsmesswerte bzw. der vorläufigen Zwischenwerte,

> wobei eine Fluktuation der vorläufigen Dämpfungsmesswerte oder eine Fluktuation von Zwischenwerten, ermittelt wird, wobei die Zwischenwerte auf Basis der vorläufigen Dämpfungsmesswerte berechnet sind;

> wobei ein fluktuationsabhängiger Korrekturterm für die vorläufigen Dämpfungs- bzw. Zwischenwerte bestimmt wird, mit dem die vorläufigen Dämpfungsmesswerte oder die Zwischenwerte zu korrigieren sind, um bereinigte Dämpfungswerte bzw. bereinigte Werte zu erhalten;

> wobei die Zielmesswerte auf Basis der bereinigten Dämpfungswerte oder auf Basis der bereinigten Zwischenwerte bestimmt werden.

In einer Weiterbildung der Erfindung umfasst der fluktuationsabhängige Korrekturterm eine Funktion der Standardabweichung der vorläufigen Dämpfungsmesswerte oder der Zwischengröße.

In einer Weiterbildung der Erfindung ist der Korrekturterm eine lineare Funktion der Standardabweichung und insbesondere proportional zur Standardabweichung, wobei insbesondere die bereinigten Dämpfungswerte oder die bereinigten Zwischenwerte durch Multiplikation mit dem Korrekturterm bzw. durch Subtraktion des Korrekturterms erhalten werden.

In einer Weiterbildung der Erfindung werden zur Korrektur der vorläufigen Dämpfungsmesswerte vorläufige Dämpfungsmittelwerte mehrerer Dämpfungsmesswerte gebildet, die mit dem Korrekturterm korrigiert werden, oder zur Korrektur der Zwischenwerte werden Zwischenmittelwerte mehrerer Zwischenwerte gebildet, die mit dem Korrekturterm korrigiert werden.

In einer Weiterbildung der Erfindung umfassen die Zwischenwerte vorläufige Zielmesswerte, die auf Basis der Dämpfungsmesswerte ohne Korrektur für die Querempfindlichkeit berechnet wurden, wobei insbesondere die bereinigten Zwischenwerte als Zielmesswerte dienen.

In einer Weiterbildung der Erfindung sind die Zielmesswerte $X_i$, welche Viskositätsmesswerte oder Messwerte der viskositätsabhängigen Größe sind, als eine lineare Funktion $X_i = F(D'_i)$ von bereinigten Dämpfungswerte $D'_i$ beschreibbar,

wobei die Zwischenwerte als eine Funktion $Z_i = G(D_i)$ von vorläufigen Dämpfungsmesswerten ermittelt werden,

wobei die Zielmesswerte als eine Funktion $X_i = H(Z'_i)$ der bereinigten Zwischenwerte ermittelt werden, und

wobei gilt:

$$|(H(G(D'_i)) - F(D'_i)) / F(D_i)| = E,$$

wobei $E < 0{,}05$ insbesondere $E < 0{,}02$, insbesondere $E > 0{,}01$.

In einer Weiterbildung der Erfindung erfolgt die Korrektur des Einflusses der Querempfindlichkeit auf Basis einer Funktion, die von dem Durchflussparameter abhängt.

In einer Weiterbildung der Erfindung wird zur Korrektur der Querempfindlichkeit ein Korrekturterm ermittelt der eine Funktion des Durchflussparameters und eines kritischen Werts SK des Durchflussparameters ist, wobei der kritische Wert des Durchflussparameters dem Wert des Durchflussparameters bei der kritischen Durchflussgeschwindigkeit entspricht, wobei die Funktion bei Werten des Durchflussparameters oberhalb des kritischen Durchflussparameters im Wesentlichen eine lineare Funktion des Durchflussparameters ist.

In einer Weiterbildung der Erfindung umfasst die Zielgröße die Viskosität, die Reynoldszahl, die Massedurchflussrate, die Volumendurchflussrate und/oder die Dichte des Mediums, wobei die Massedurchflussrate, die Volumendurchflussrate und/oder die Dichte bezüglich einer Querempfindlichkeit zur Viskosität korrigiert sind.

Das erfindungsgemäße Messgerät zum Ermitteln einer Zielgröße eines fließfähigen Mediums umfasst mindestens ein schwingfähiges Messrohr zum Führen eines Mediums, mindestens einen Erreger zum Anregen von Schwingungen des Messrohrs; mindestens einen Sensor zum Erfassen von Schwingungen des Messrohrs und zum Ausgeben von schwingungsabhängigen Signalen; und eine Mess- und Betriebsschaltung zum Treiben des Erregers und zum Verarbeiten der schwingungsabhängigen Signale; wobei erfindungsgemäß die Mess- und Betriebsschaltung dazu eingerichtet ist, das erfindungsgemäße Verfahren durchzuführen.

Die Erfindung wird nun anhand der in den Zeichnungen dargestellten Ausführungsbeispiele näher erläutert. Es zeigt:

Fig. 1: Eine schematische Darstellung eines Ausführungsbeispiel des erfindungsgemäßen Messgeräts;

Fig. 2: Ein Diagramm, welches die Dämpfung in Abhängigkeit von einer Durchflussrate darstellt;

Fig. 3 Ein Flussdiagramm eines ersten Ausführungsbeispiels des erfindungsgemäßen Verfahrens;

Fig. 4: Ein Flussdiagramm eines zweiten Ausführungsbeispiels des erfindungsgemäßen Verfahrens;

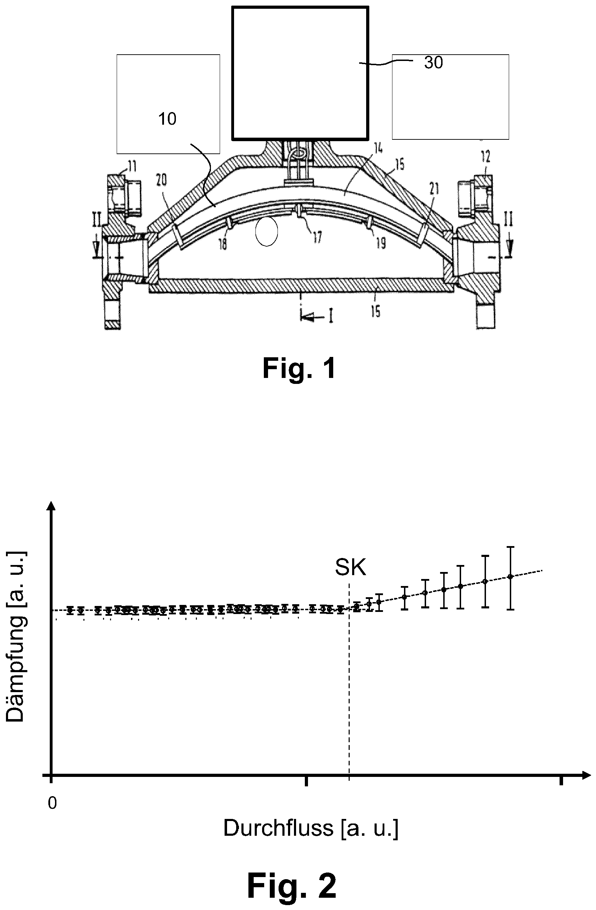

Das in Fig. 1 dargestellte Ausführungsbeispiel eines erfindungsgemäßen Messgeräts 1 umfasst einen Oszillator 10 der ein Paar von parallel geführten schwingfähigen Messrohren 14 umfasst, die sich zwischen einem einlassseitigen Flansch 11 und einem auslassseitigen Flansch 12 erstrecken, wobei die Flansche jeweils einen Strömungsteiler bzw. Sammler umfassen, in den die Messrohre 14 münden. Die Strömungsteiler sind durch ein starres Gehäuse 15 miteinander verbunden, so dass Schwingungen der die Messrohre aufnehmenden Strömungsteiler im Bereich von Schwingungsfrequenzen von Biegeschwingungsnutzmoden des Oszillators wirksam unterdrückt sind. Die Messrohre 10 sind mit einer einlassseitigen Knotenplatte 20 und einer auslassseitigen Knotenplatte 21 starr verbunden, wobei die Knotenplatten Schwingungsknoten des durch die beiden der Messrohre 14 gebildeten Oszillators 10 definieren, und damit die Frequenzen der Biegeschwingungsnutzmoden weitgehend festlegen. Der Oszillator 10 wird mit einem zwischen den beiden Messrohren 14 wirkenden elektrodynamischen Erregers 17 zum Schwingen angeregt, wobei die Schwingungen mittels zweier Relativbewegungen der Messrohre 14 zueinander erfassender Schwingungssensoren 18, 19 detektiert werden. Der Erreger 17 wird von einer Betriebs- und Auswerteschaltung 30 betrieben, wobei letztere auch die Signale der Schwingungssensoren erfasst und auswertet, um einen Dichtemesswert und ggf. einen Massedurchflussmesswert zu ermitteln. Die Betriebs- und Auswerteschaltung 30 ist erfindungsgemäß ebenfalls dazu eingerichtet, das erfindungsgemäße Verfahren auszuführen, also insbesondere vorläufige Dämpfungsmesswerte der Messrohrschwingungen zu ermitteln und daraus einen bereinigten Dämpfungsmesswert zu berechnen. Die Betriebs- und Auswerteschaltung kann, anders als in Fig 1 dargestellt, auch mehrere, räumlich getrennte Module umfassen. So kann die Berechnung der Dämpfung auch in einem abgesetzten Rechenmodul erfolgen, dem die erforderlichen Rohdaten übermittelt werden, beispielsweise drahtlos.

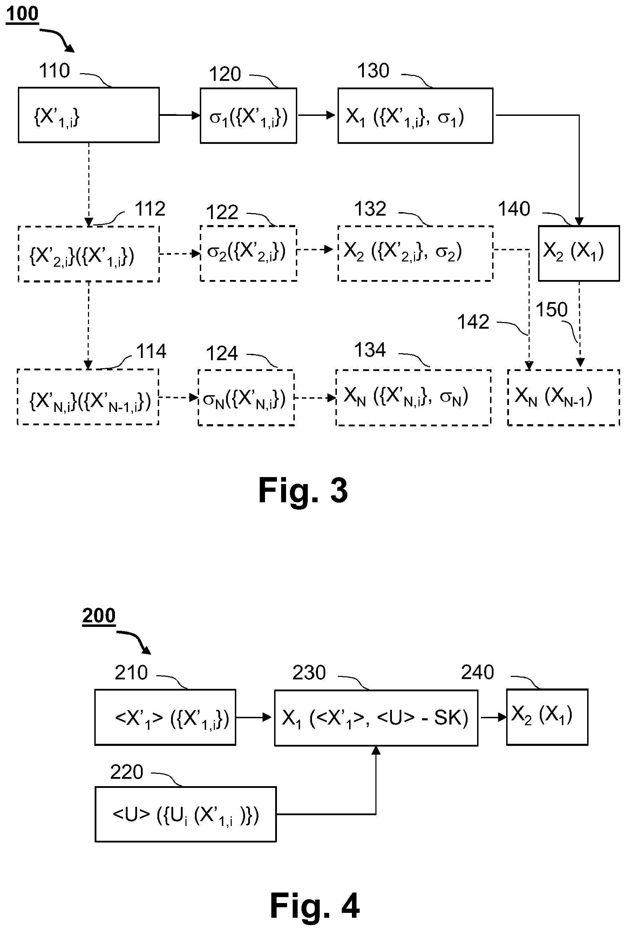

In Fig. 2 sind typische Dämpfungsmesswerte für die Messrohrschwingungen eines Coriolis-Massedurchflussmessgerätes als Funktion der Durchflussrate einer Flüssigkeit dargestellt. Eine dämpfungsproportionale Observable ist beispielsweise das Verhältnis aus Erregerstrom und Schwingungsamplitude, wobei die Schwingungsamplitude mittels elektromagnetischer Sensoren als mit der Schwingungsfrequenz zu normierende, geschwindigkeitsproportionale Induktionsspannung zu erfassen ist. Die Fluktuation bzw. Standardabweichung der Dämpfung ist über einen weiten Durchflussratenbereich konstant steigt aber ab einem Schwellwert mit zunehmendem Durchfluss in erster Näherung linear an, wobei auch der Mittelwert der Dämpfung oberhalb des Schwellwerts näherungsweise linear ansteigt. Der Schwellwert entspricht bei einem Messaufnehmer der Größe DN 25 einer Durchflussgeschwindigkeit von einigen m/s beispielsweise etwa 4 m/s. Es gibt nun zwei erfindungsgemäße Ansätze bei Durchflussraten oberhalb des Schwellwerts ausgehend von beobachteten Dämpfungsmesswerten geschwindigkeitsunabhängige bzw. bereinigte Dämpfungswerte zu ermitteln. Erstens kann anhand der Standardabweichung vorläufiger Dämpfungswerte ein Korrekturterm ermittelt werden, um einen bereinigten Dämpfungswert zu erhalten, wie anhand Fig. 3 näher erläutert wird. Zweitens kann bei Überschreitung des Schwellwerts der Durchflussrate anhand der Differenz zwischen der aktuellen Durchflussrate und dem Schwellwert ein Korrekturterm ermittelt werden, wie anhand von Fig. 4 näher erläutert wird.

Das erste Ausführungsbeispiel 100 des erfindungsgemäßen Verfahrens wird nun anhand von Fig. 3 erläutert. In einem ersten Verfahrensschritt 110 wird eine Folge von vorläufigen Dämpfungsmesswerten $\{X'_{1,i}\}$ erfasst, beispielsweise als Verhältnis von Erregerstrom und Schwingungsamplitude. In einem zweiten Schritt 120 erfolgt die Ermittlung der Standardabweichung $\sigma_1(\{X'_{1,i}\})$ der vorläufigen Dämpfungsmesswerte $\{X'_{1,i}\}$. In einem dritten Schritt 130 erfolgt die Bestimmung eines bereinigten Dämpfungswerts $X_1 (\{X'_{1,i}\}, \sigma_1)$, wobei von einem Mittelwert der vorläufigen Dämpfungsmesswerte beispielsweise ein Korrekturterm abgezogen wird, der eine insbesondere lineare Funktion der Standardabweichung $\sigma_1$ ist. Anhand des bereinigten Dämpfungswerts $X_1$ kann dann ein Viskositätswert $X_2 (X_1)$ berechnet werden 140. Hierbei kann es sich um die dynamische Viskosität $\eta$ oder eine kinematische Viskosität $v$ handeln, wobei in letztere noch ein Dichtemesswert des Mediums eingeht. Die Viskosität geht schließlich in weitere Größen $X_N$ ein, beispielsweise die Reynoldszahl Re, welche auf Basis der Massedurchflussrate, und der zuvor ermittelten dynamischen Viskosität berechnet wird 150. Die Reynoldszahl kann Ihrerseits dann wiederum in die Korrektur des Massedurchflussmesswerts eingehen, wie beispielsweise in EP 1 055 102 B1 beschrieben ist.

Das erste Ausführungsbeispiel umfasst Varianten, die ebenfalls in Fig. 3 dargestellt sind. So können die vorläufigen Dämpfungsmesswerte $\{X'_{1,i}\}$ zunächst in vorläufige Zwischenwerte einer aus der Dämpfung abgeleiteten Größe $\{X'_{2,i}\}$ $(\{X'_{1,i}\})$ umgerechnet werden 112. In einem Folgeschritt 122 wird die Standardabweichung $\sigma_2(\{X'_{2,i}\})$ der vorläufigen Zwischenwerte $\{X'_{2,i}\}$ berechnet. In einem dritten Schritt 132 erfolgt die Bestimmung eines bereinigten Zwischenwerts $X_2 (\{X'_{2,i}\}, \sigma_2)$, wobei von einem Mittelwert der vorläufigen Zwischenwerte $\{X'_{2,i}\}$ beispielsweise ein Korrekturterm abgezogen wird, der eine insbesondere lineare Funktion der Standardabweichung $\sigma_2$ ist. Der bereinigte Zwischenwert kann beispielsweise die Viskosität des Mediums präsentieren. Unter Verwendung des bereinigten Zwischenwerts $X_2$ können weitere abgeleitete Größen $X_N$ bestimmt werden 142, beispielsweise die Reynoldszahl Re. In einer weiteren Alternative können die vorläufigen Zwischengrößen $\{X'_{2,i}\}$ zunächst in vorläufige Zielmesswerte $\{X'_{N,i}\}$ aus den Zwischengrößen $\{X'_{2,i}\}$ $(\{X'_{2,i}\})$ umgerechnet werden 114. In einem Folgeschritt 124 wird die Standardabweichung $\sigma_N(\{X'_{N,i}\})$ der vorläufigen Zielmesswerte $\{X'_{2,i}\}$ berechnet, worauf die Ermittlung eines bereinigten Zielmesswerts $X_N$ in einem weiteren Schritt 134 erfolgt gemäß $X_N (\{X'_{N,i}\}, \sigma_N)$, wobei von einem Mittelwert der vorläufigen Zielmesswerte $\{X'_{N,i}\}$ beispielsweise ein Korrekturterm abgezogen wird der eine insbesondere lineare Funktion der Standardabweichung $\sigma_N$ ist. Der bereinigte Zielmesswert $X_N$ kann beispielsweise die Reynoldszahl Re präsentieren.

Das zweite Ausführungsbeispiel 200 des erfindungsgemäßen Verfahrens wird nun anhand von Fig. 4 erläutert. In einem ersten Verfahrensschritt 210 wird eine Folge von vorläufigen Dämpfungsmesswerten $\{X'_{1,i}\}$ erfasst und deren Mittelwert $<X'_1>(\{X'_{1,i}\})$, wird berechnet. In einem weiteren Schritt 220 erfolgt die Berechnung eines Mittelwerts $<U>$ von Werten $U_i$ eines Durchflussparameters U beim Erfassen der vorläufigen Dämpfungsmesswerte $\{U_i (X'_{1,i}\}$. Der Durchflussparameter kann insbesondere eine Durchflussgeschwindigkeit, eine Massendurchflussrate oder eine Volumendurchflussrate umfassen.

In einem weiteren Schritt 230 wird aus dem Mittelwert der vorläufigen Dämpfungsmesswerte $<X'_1>$ ein bereinigter Dämpfungswert $X_1$ ermittelt, wobei in Abhängigkeit von einer Überschreitung eines kritischen Durchflussparameters SK durch den Mittelwert des $<U>$ des Durchflussparameters ein Korrekturterm von dem Mittelwert der vorläufigen Dämpfungsmesswerte subtrahiert wird, wobei der Korrekturterm eine monotone Funktion der Überschreitung des kritischen Durchflussparameters ist. Wenn als Durchflussparameter eine Durchflussgeschwindigkeit gewählt ist, beträgt ein typischer Wert für den kritischen Durchflussparameter bei einem Gerät der Nennweite DN 25 beispielsweise 3 m/s bis 5 m/s. Konkrete Werte sind geräteabhängig experimentell zu ermitteln. Auf Basis des bereinigten Dämpfungswerts $X_1$ kann in einem weiteren Schritt 240 eine davon abhängige

Messgröße $X_2$ bestimmt werden, beispielsweise der Viskosität, die folglich ebenfalls von Einflüssen der Durchflussparameters bereinigt ist. Variationen des zweiten Ausführungsbeispiels ergeben sich für den Fachmann entsprechend zu den oben diskutierten Variationen des ersten Ausführungsbeispiels.

**Patentansprüche**

1. Verfahren zum Bestimmen eines Zielmesswerts (X), welcher eine Viskosität eines Mediums oder eine von der Viskosität abhängige Größe umfasst, eines ein Messrohr durchströmenden Mediums auf Basis von vorläufigen Dämpfungsmesswerten mindestens einer Schwingungsmode des Messrohrs, wobei die Dämpfung von der Viskosität des Mediums abhängt und eine Querempfindlichkeit zur Durchflussgeschwindigkeit des Mediums aufweist, wobei das Verfahren umfasst:

   Anregen von Schwingungen mindestens einer Schwingungsmode;
   Erfassen einer Folge von vorläufigen Dämpfungsmesswerten (110; 210) für die mindestens eine Schwingungsmode des Messrohrs; und
   Berechnen von Zielmesswerten (X) (140; 240); dass
   eine Korrektur des Einflusses der Querempfindlichkeit der Dämpfung zur Durchflussgeschwindigkeit des Mediums erfolgt, indem auf Basis der vorläufigen Dämpfungsmesswerte bereinigte Dämpfungsmesswerte ermitteln werden (130; 230), welche der Dämpfung bei einem nicht strömenden Medium entsprechen, und das Ermitteln der Zielmesswerte auf Basis der bereinigten Dämpfungsmesswerte erfolgt, oder eine Korrektur des Einflusses der Querempfindlichkeit der Dämpfung zur Durchflussgeschwindigkeit des Mediums erfolgt, indem auf Basis der vorläufigen Dämpfungsmesswerte vorläufige Zwischenwerte einer dämpfungsabhängigen Größe bestimmt werden (112; 114), bereinigte Zwischenwerte ermitteln werden (132; 134), welche den Zwischenwerten bei einem nicht strömenden Medium entsprechen, und das Ermitteln der Zielmesswerte (142) auf Basis der bereinigten Zwischenwerte erfolgt, **dadurch gekennzeichnet dass** die Querempfindlichkeit der Dämpfung zur Durchflussgeschwindigkeit oberhalb eines kritischen Geschwindigkeitswerts einen Anstieg der Dämpfung mit der Durchflussgeschwindigkeit bewirkt, und wobei die Fluktuation der vorläufigen Dämpfungsmesswerte mit der Durchflussgeschwindigkeit zunimmt, wobei die Korrektur des Einflusses der Querempfindlichkeit auf Basis der Fluktuation der vorläufigen Dämpfungsmesswerte bzw. der vorläufigen Zwischenwerte und/oder auf Basis einer Funktion erfolgt, die von einem Durchflussparameter des Mediums abhängt, wobei der Durchflussparameter einen insbesondere vorläufigen Wert der Massedurchflussrate, der Volumendurchflussrate, der Reynoldszahl oder der Durchflussgeschwindigkeit umfasst.

2. Verfahren nach Anspruch 1, wobei die Korrektur des Einflusses der Querempfindlichkeit auf Basis der Fluktuation der vorläufigen Dämpfungsmesswerte bzw. der vorläufigen Zwischenwerte erfolgt,

   wobei eine Fluktuation der vorläufigen Dämpfungsmesswerte oder eine Fluktuation von Zwischenwerten, ermittelt wird, wobei die Zwischenwerte auf Basis der vorläufigen Dämpfungsmesswerte berechnet sind;
   wobei ein fluktuationsabhängiger Korrekturterm für die vorläufigen Dämpfungs- bzw. Zwischenwerte bestimmt wird, mit dem die vorläufigen Dämpfungsmesswerte oder die Zwischenwerte zu korrigieren sind, um bereinigte Dämpfungswerte bzw. bereinigte Werte zu erhalten;
   wobei die Zielmesswerte auf Basis der bereinigten Dämpfungswerte oder auf Basis der bereinigten Zwischenwerte bestimmt werden.

3. Verfahren nach Anspruch 1 oder 2, wobei der fluktuationsabhängige Korrekturterm eine Funktion der Standardabweichung der vorläufigen Dämpfungsmesswerte oder der Zwischengröße umfasst.

4. Verfahren nach Anspruch 3, wobei der Korrekturterm eine lineare Funktion der Standardabweichung ist, und insbesondere proportional zur Standardabweichung ist, wobei insbesondere die bereinigten Dämpfungswerte oder die bereinigten Zwischenwerte durch Multiplikation mit dem Korrekturterm bzw. durch Subtraktion des Korrekturterms erhalten werden.

5. Verfahren nach einem der vorhergehenden Ansprüche,

   wobei zur Korrektur der vorläufigen Dämpfungsmesswerte vorläufige Dämpfungsmittelwerte mehrerer Dämpfungsmesswerte gebildet werden, die mit dem Korrekturterm korrigiert werden, oder
   wobei zur Korrektur der Zwischenwerte Zwischenmittelwerte mehrerer Zwischenwerte gebildet werden, die mit dem Korrekturterm korrigiert werden,

6. Verfahren nach einem der vorhergehenden Ansprüche, wobei die Zwischenwerte vorläufige Zielmesswerte umfassen, die auf Basis der Dämpfungsmesswerte ohne Korrektur für die Querempfindlichkeit berechnet wurden, wobei insbesondere die bereinigten Zwischenwerte als Zielmesswerte dienen.

7. Verfahren nach einem der vorhergehenden Ansprüche,

   wobei Zielmesswerte $X_i$, welche Viskositätsmesswerte oder Messwerte der viskositätsabhängigen Größe sind, als eine lineare Funktion $X_i = F(D'_i)$ von bereinigten Dämpfungswerte $D'_i$ beschreibbar sind,
   wobei die Zwischenwerte als eine Funktion $Z_i = G(D_j)$ von vorläufigen Dämpfungsmesswerten ermittelt werden,
   wobei die Zielmesswerte als eine Funktion $X_i = H(Z'_i)$ der bereinigten Zwischenwerte ermittelt werden, und
   wobei gilt:

   $$|(H(G(D'_i)) - F(D'_i)) / F(D_i)| = E,$$

   wobei E < 0,05 insbesondere E < 0,02, insbesondere E > 0,01.

8. Verfahren nach Anspruch 1, wobei die Korrektur des Einflusses der Querempfindlichkeit auf Basis einer Funktion erfolgt, die von dem Durchflussparameter abhängt.

9. Verfahren nach Anspruch 8, wobei zur Korrektur der Querempfindlichkeit ein Korrekturterm ermittelt wird, der eine Funktion des Durchflussparameters und eines kritischen Werts des Durchflussparameters ist, wobei der kritische Wert des Durchflussparameters dem Wert des Durchflussparameters bei der kritischen Durchflussgeschwindigkeit entspricht, wobei die Funktion bei Werten des Durchflussparameters oberhalb des kritischen Durchflussparameters (SK) im Wesentlichen eine lineare Funktion des Durchflussparameters ist.

10. Messgerät zum Ermitteln einer Zielgröße eines fließfähigen Mediums, umfassend:

    mindestens ein schwingfähiges Messrohr zum Führen eines Mediums, mindestens einen Erreger zum Anregen von Schwingungen des Messrohrs;
    mindestens einen Sensor zum Erfassen von Schwingungen des Messrohrs und zum Ausgeben von schwingungsabhängigen Signalen; und
    eine Mess- und Betriebsschaltung zum Treiben des Erregers und zum Verarbeiten der schwingungsabhängigen Signale;

**dadurch gekennzeichnet, dass**
die Mess-und Betriebsschaltung dazu eingerichtet ist, das Verfahren nach einem der Ansprüche 1 bis 9 durchzuführen.

## Claims

1. Method for determining a target measured value (X), which comprises a visco sity of a medium or a viscosity-dependent variable, of a medium flowing through a measuring tube on the basis of preliminary damping measured values of at least one oscillation mode of the measuring tube, the damping being dependent on the vis cosity of the medium and having a cross-sensitivity to the flow velocity of the medium, the method comprising :

   Excitation of oscillations of at least one oscillation mode;
   acquiring a sequence of preliminary measured damping values (110; 210) for the at least one vibration mode of the measuring tube; and
   Calculate target measured values (X) (140; 240);
   that
   a correction of the influence of the cross-sensitivity of the damping on the flow velocity of the medium is carried out by determining (130; 230), on the basis of the preliminary measured damping values, adjusted measured damping values which correspond to the damping in a non-flowing medium, and the target measured values are determined on the basis of the adjusted measured damping values, or
   a correction of the influence of the cross-sensitivity of the damping on the flow velocity of the medium is carried out by determining (112; 114) preliminary intermediate values of a damping-dependent variable on the basis of the preliminary damping measured values, determining (132; 134) adjusted intermediate values which correspond to the intermediate values for a non-flowing medium, and determining the target measured values (142) on the basis of the adjusted intermediate values,
   **characterized in that**
   the cross-sensitivity of the attenuation to the flow velocity above a critical velocity value causes the attenuation to increase with the flow velocity, and the fluctuation of the preliminary attenuation measurement values increases with the flow velocity,
   wherein the correction of the influence of the cross-sensitivity is carried out on the basis of the flow tuation of the preliminary measured attenuation values or the preliminary intermediate values and/or on the basis of a function which depends on a flow parameter of the medium, wherein the flow parameter comprises, in particular, a preliminary value of the mass flow rate, the volume flow rate, the Reynolds number or the flow velocity.

2. Method according to claim 1, wherein the correction of the influence of the transverse sensitivity is carried out on the basis of the fluctuation of the preliminary attenuation measured values or the preliminary intermediate values,

   whereby a fluctuation of the preliminary measured attenuation values or a fluctuation of intermediate values is determined, whereby the intermediate values are calculated on the basis of the preliminary measured attenuation values;
   whereby a fluctuation-dependent correction term is determined for the provisional attenuation or intermediate values, with which the provisional attenuation measured values or the intermediate values are to be corrected in order to obtain adjusted attenuation values or adjusted values;
   whereby the target measured values are determined on the basis of the adjusted attenuation values or on the basis of the adjusted intermediate values.

3. The method according to claim 1 or 2, wherein the fluctuation-dependent correction term comprises a function of the standard deviation of the preliminary attenuation measurement values or the intermediate variable.

4. Method according to claim 3, wherein the correction term is a linear function of the standard deviation, and in particular is proportional to the standard deviation, wherein in particular the adjusted attenuation values or the adjusted intermediate values are obtained by multiplication with the correction term or by subtraction of the correction term.

5. A method according to any one of the preceding claims,

   whereby, in order to correct the preliminary measured attenuation values, preliminary average attenuation values of several measured attenuation values are formed, which are corrected using the correction term, or
   whereby intermediate mean values of several intermediate values are formed to correct the intermediate values, which are corrected with the correction term,

6. Method according to one of the preceding claims, wherein the intermediate values comprise preliminary target measured values which were calculated on the basis of the attenuation measurement values without correction for the cross-sensitivity, wherein in particular the adjusted intermediate values serve as target measured values.

7. A method according to any one of the preceding claims,

   where target measured values $X_i$, which are viscosity measured values or measured values of the viscosity-dependent variable, are defined as a linear function
   $X_i = F(D'_i)$ can be described by adjusted attenuation values $D'_i$,
   whereby the intermediate values are determined as a function $Z_i = G(D_i)$ of preliminary measured attenuation values,
   where the target measured values are determined as a function $X_i = H(Z'_i)$ of the adjusted intermediate values, and
   where:

   $$|(H(G(D'_i)) - F(D'_i)) / F(D_i)| = E,$$

   where $E < 0.05$, in particular $E < 0.02$, in particular $E > 0.01$.

8. The method according to claim 1, wherein the correction of the influence of the transverse sensitivity is based on a function that depends on the flow parameter.

9. The method according to claim 8, wherein a correction term is determined for correcting the cross-sensitivity, which correction term is a function of the flow parameter and a critical value of the flow parameter, wherein the critical value of the flow parameter corresponds to the value of the flow parameter at the critical flow rate, wherein the function is substantially a linear function of the flow parameter at values of the flow parameter above the critical flow parameter (SK).

10. Measuring device for determining a target variable of a flowable medium, comprising:

    at least one vibrating measuring tube for guiding a medium, at least one exciter for exciting vibrations of the measuring tube;
    at least one sensor for detecting vibrations of the measuring tube and for outputting vibration-dependent signals; and
    a measuring and operating circuit for driving the exciter and for processing the vibration-dependent signals;
    **characterized in that**

the measuring and operating circuit is set up to carry out the method according to one of claims 1 to 9.

## Revendications

1. Procédé de détermination d'une valeur de mesure cible (X), qui comprend une viscosité d'un milieu ou une quantité dépendant de la viscosité, d'un milieu s'écoulant à travers un tube de mesure, sur la base de valeurs de mesure d'atténuation provisoires d'au moins un mode d'oscillation du tube de mesure, l'atténuation dépendant de la viscosité du milieu et présentant une sensibilité croisée à la vitesse d'écoulement du milieu, le procédé comprenant :

   Excitation des vibrations d'au moins un mode de vibration ;
   l'acquisition d'une séquence de mesures d'atténuation préliminaires (110 ; 210) pour ledit au moins un mode de vibration du tube de mesure ; et
   Calcul des valeurs de mesure cibles (X) (140 ; 240) ;
   que
   une correction de l'influence de la sensibilité transversale de l'amortissement à la vitesse d'écoulement du fluide est effectuée en déterminant (130 ; 230), sur la base des valeurs de mesure d'amortissement provisoires, des valeurs de mesure d'amortissement corrigées qui correspondent à l'amortissement pour un fluide qui ne s'écoule pas, et la détermination des valeurs de mesure cibles est effectuée sur la base des valeurs de mesure d'amortissement corrigées, ou bien
   une correction de l'influence de la sensibilité transversale de l'amortissement à la vitesse d'écoulement du fluide s'effectue en déterminant (112 ; 114) des valeurs intermédiaires provisoires d'une grandeur dépendant de l'amortissement sur la base des valeurs de mesure provisoires de l'amortissement, en déterminant (132 ; 134) des valeurs intermédiaires corrigées qui correspondent aux valeurs intermédiaires pour un fluide ne s'écoulant pas, et en déterminant les valeurs de mesure cibles (142) sur la base des valeurs intermédiaires corrigées,
   **caractérisé en ce que**
   la sensibilité croisée de l'atténuation à la vitesse d'écoulement au-dessus d'une valeur de vitesse critique provoque une augmentation de l'atténuation avec la vitesse d'écoulement, et dans lequel la fluctuation des valeurs de mesure d'atténuation provisoires augmente avec la vitesse d'écoulement,
   la correction de l'influence de l'interférence étant effectuée sur la base de la situation de flux des valeurs de mesure d'atténuation provisoires ou des valeurs intermédiaires provisoires et/ou sur la base d'une fonction qui dépend d'un paramètre de débit du fluide, le paramètre de débit comprenant une valeur en particulier provisoire du débit massique, du débit volumique, du nombre de Reynolds ou de la vitesse d'écoulement.

2. Procédé selon la revendication 1, dans lequel la correction de l'influence de la sensibilité transversale est effectuée sur la base de la fluctuation des valeurs de mesure d'atténuation provisoires ou des valeurs intermédiaires provisoires,

   dans lequel une fluctuation des valeurs de mesure d'atténuation provisoires ou une fluctuation ation de valeurs intermédiaires est déterminée, les valeurs intermédiaires étant calculées sur la base des valeurs de mesure d'atténuation provisoires ;
   un terme de correction dépendant de la fluctuation étant déterminé pour les valeurs d'atténuation provisoires ou les valeurs intermédiaires, avec lequel les valeurs de mesure d'atténuation provisoires ou les valeurs intermédiaires doivent être corrigées afin d'obtenir des valeurs d'atténuation corrigées ou des valeurs corrigées ;
   les valeurs de mesure cibles étant déterminées sur la base des valeurs d'atténuation corrigées ou sur la base des valeurs intermédiaires corrigées.

3. Procédé selon la revendication 1 ou 2, dans lequel le terme de correction dépendant de la fluctuation comprend une fonction de l'écart-type des valeurs de mesure d'atténuation provisoires ou de la grandeur intermédiaire.

4. Procédé selon la revendication 3, dans lequel le terme de correction est une fonction linéaire de l'écart-type, et est notamment proportionnel à l'écart-type , les valeurs d'atténuation corrigées ou les valeurs intermédiaires corrigées étant notamment obtenues par multiplication par le terme de correction ou par soustraction du terme de correction.

5. Procédé selon l'une quelconque des revendications précédentes,

   où, pour corriger les valeurs d'atténuation mesurées provisoires, on forme des moyennes d'atténuation provisoires de plusieurs valeurs d'atténuation mesurées, qui sont corrigées avec le terme de correction, ou
   des moyennes intermédiaires de plusieurs valeurs intermédiaires étant formées pour corriger les valeurs intermédiaires, lesquelles sont corrigées avec le terme de correction,

6. Procédé selon l'une quelconque des revendications précédentes, dans lequel les valeurs intermédiaires comprennent des valeurs de mesure cibles provisoires calculées sur la base des valeurs d'atténuation mesure sans correction pour l'interférence, en particulier les valeurs intermédiaires corrigées servant de valeurs de mesure cibles.

7. Procédé selon l'une quelconque des revendications précédentes,

où les valeurs de mesure cibles $X_i$ , qui sont des valeurs de mesure de la viscosité ou des valeurs de mesure de la grandeur dépendant de la viscosité, sont définies comme une fonction linéaire

$X_i = F(D'_i)$ de valeurs d'atténuation corrigées $D'_i$ peuvent être décrites,

les valeurs intermédiaires étant déterminées comme une fonction $Z_i = G(D_i)$ de valeurs de mesure d'atténuation provisoires,

les valeurs de mesure cibles étant déterminées comme une fonction $X_i = H(Z'_i)$ des valeurs intermédiaires corrigées, et

où :

$$|(H(G(D'_i)) - F(D'_i)) / F(D_i)| = E,$$

où E < 0,05, en particulier E < 0,02, en particulier E > 0,01.

8. Procédé selon la revendication 1, dans lequel la correction de l'influence de la sensibilité transversale est effectuée sur la base d'une fonction qui dépend du paramètre de débit.

9. Procédé selon la revendication 8, dans lequel, pour corriger l'interférence, on détermine un terme de correction qui est une fonction du paramètre d'écoulement et d'une valeur critique du paramètre d'écoulement, la valeur critique du paramètre d'écoulement correspondant à la valeur du paramètre d'écoulement à la vitesse d'écoulement critique, la fonction étant sensiblement une fonction linéaire du paramètre d'écoulement pour des valeurs du paramètre d'écoulement supérieures au paramètre d'écoulement critique (SK).

10. Appareil de mesure pour déterminer une grandeur cible d'un milieu fluide, comprenant :

au moins un tube de mesure capable d'osciller pour guider un fluide, au moins un excitateur pour exciter les oscillations du tube de mesure ;
au moins un capteur pour détecter les vibrations du tube de mesure et pour émettre des signaux dépendant des vibrations ; et
un circuit de mesure et de fonctionnement pour piloter l'excitateur et traiter les signaux dépendant des vibrations ;
**caractérisé en ce que**
le circuit de mesure et de fonctionnement est adapté pour mettre en oeuvre le procédé selon l'une quelconque des revendications 1 à 9.

## Fig. 1

## Fig. 2

**100**

110
$\{X'_{1,i}\}$

120
$\sigma_1(\{X'_{1,i}\})$

130
$X_1 (\{X'_{1,i}\}, \sigma_1)$

112
$\{X'_{2,i}\}(\{X'_{1,i}\})$

122
$\sigma_2(\{X'_{2,i}\})$

132
$X_2 (\{X'_{2,i}\}, \sigma_2)$

140
$X_2 (X_1)$

114
$\{X'_{N,i}\}(\{X'_{N-1,i}\})$

124
$\sigma_N(\{X'_{N,i}\})$

134
$X_N (\{X'_{N,i}\}, \sigma_N)$

142      150
$X_N (X_{N-1})$

# Fig. 3

**200**

210
$<X'_1> (\{X'_{1,i}\})$

230
$X_1 (<X'_1>, <U> - SK)$

240
$X_2 (X_1)$

220
$<U> (\{U_i (X'_{1,i})\})$

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10020606 A1
- DE 102004014029 A1
- WO 2018114402 A1
- EP 1055102 B1